# EUROPEAN PATENT APPLICATION

(11) **EP 3 232 035 A1**
(43) Date of publication of application: **18.10.2017**
(21) Application number: 17164908.0
(22) Date of filing: 05.04.2017
(51) Int. Cl.: F02C 7/05, F02C 7/143

(54) **MOISTURE DETECTION SYSTEM FOR GAS TURBINE INLET**

(30) Priority: 12.04.2016 US 201615096310
(71) Applicant: General Electric Company, Schenectady, NY 12345 (US)
(72) Inventor: UPADHYAY, Siddharth, 560066 Bangalore (IN); KIPPEL, Bradly Aaron, Greenville, SC South Carolina 29615 (US)
(74) Representative: Lee, Brenda

(57) **Abstract**

The present application describes a gas turbine inlet air system (100) for providing a flow of air (20) to a compressor (15). The gas turbine inlet air system (100) may include an inlet air water cooling system (110) positioned upstream of the compressor (15) for cooling the flow of air (20) with a flow of water (155) and a moisture detection system (170) positioned downstream of the inlet air water cooling system (110) to detect if droplets of the flow of water (155) pass beyond the inlet air water cooling system (110) in the flow of air (20) towards the compressor (15).

## Description

### TECHNICAL FIELD

The present application and the resultant patent relate generally to gas turbine engines and more particularly relate to gas turbine engines with an inlet air moisture detection system so as to monitor and limit moisture carryover into a compressor.

### BACKGROUND OF THE INVENTION

Overall gas turbine engine power output may decrease with increasing ambient inlet air flow temperatures. As such, one method of increasing the power output of a gas turbine engine is by cooling the inlet air before compressing the air in the compressor. Such inlet air cooling causes the air to have a higher density so as to create a higher mass flow rate in the compressor. Such a higher mass flow rate of the air into the compressor allows more air to be compressed so as to allow the gas turbine engine to produce more power.

Various cooling systems have been utilized to reduce the inlet air temperature, particularly during ambient conditions that have higher air temperatures and/or humidity. These cooling systems attempt to achieve this goal by conditioning the air upstream of the compressor. Conditioning may be considered the process of adjusting at least one physical property of the air. These physical properties may include wet bulb temperature, dry bulb temperature, humidity, density, and the like. By adjusting one or more physical properties of the incoming airflow, overall performance of the gas turbine engine may be improved. Some known examples of these cooling systems include media type evaporative coolers, chiller systems, fogger systems, high foggers, wet compression systems, and the like. These cooling systems generally include one or more flows of water for heat exchange with the ambient airflow and/or a heat exchanger generating condensate when cooling below the dew point temperature. Other types of inlet air cooling systems also may be used.

During cooling operations, water droplets may become entrained in the airflow. Such water droplets may cause damage to the downstream compressor blades. To capture such water droplets, drift eliminators and the like may be used downstream of the cooling systems. Any droplets that pass through the drift eliminators, however, may reach the compressor blades and cause such erosion and damage. Other methods, such as fogging, high fogging, or wet compression may rely on controlling the droplet size exiting the nozzle to avoid compressor blade damage.

### SUMMARY OF THE INVENTION

The present application and the resultant patent thus describe a gas turbine inlet air system for providing a flow of air to a compressor. The gas turbine inlet air system may include an inlet air water cooling system positioned upstream of the compressor for cooling the flow of air with a flow of water and a moisture detection system positioned downstream of the inlet air water cooling system to detect if droplets of the flow of water pass beyond the inlet air water cooling system in the flow of air towards the compressor.

The present application and the resultant patent further provide a method of operating a gas turbine inlet air system. The method may include the steps of cooling an inlet flow of air in an inlet air water cooling system with a flow of water, positioning a water detection system downstream of the inlet air water cooling system, optically monitoring the flow of air by the water detection system to determine if water droplets therein create a spectrum, and stopping the inlet air water cooling system if more than a predetermined volume of water droplets is detected.

The present application and the resultant patent further provide a gas turbine engine operating on a flow of air. The gas turbine engine may include a compressor, an inlet air water cooling system positioned upstream of the compressor for cooling the flow of air with a flow of water, a drift eliminator positioned downstream of the inlet air water cooling system, and a moisture detection system positioned downstream of the drift eliminator to detect if droplets of the flow of water pass beyond the drift eliminator in the flow of air towards the compressor.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and a load.
Fig. 2 is a schematic diagram of a gas turbine engine with an inlet air system.
Fig. 3 is a schematic diagram of an inlet air system with a moisture detection system as may be described herein.
Fig. 4 is a schematic diagram of the moisture detection system of Fig. 3.
Fig. 5 is a schematic diagram of the moisture detection of Fig. 3 in use.
Fig. 6 is a schematic diagram of an alternative embodiment of an inlet air system with a moisture detection system as may be described herein.
Fig. 7 is a schematic diagram of an alternative embodiment of an inlet air system with a moisture detection system as may be described herein.

### DETAILED DESCRIPTION

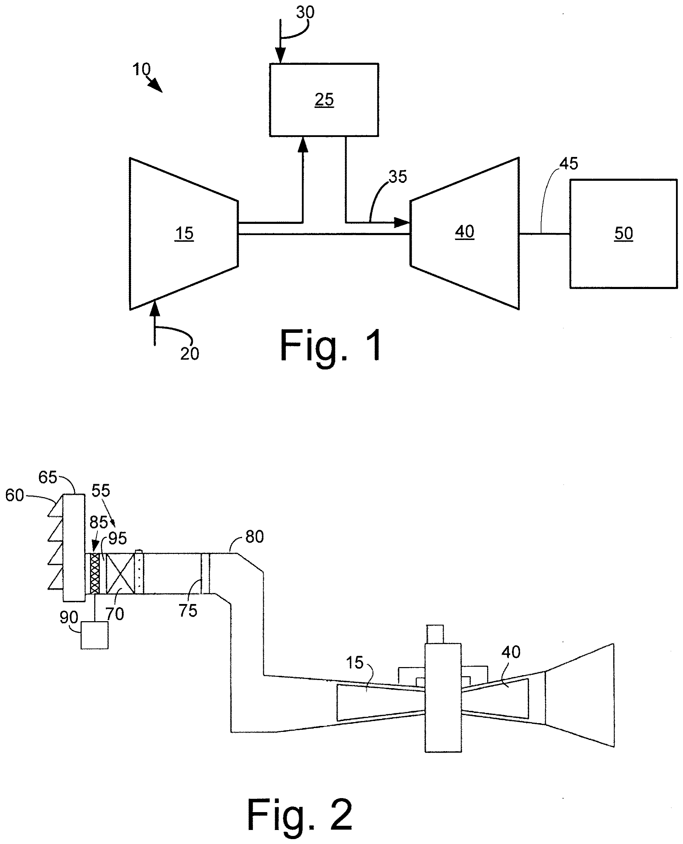

Referring now to the drawings, in which like numerals refer to like elements throughout the several views, Fig. 1 shows a schematic diagram of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25 configured in a circumferential array. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like. One or more air extractions 52 may extend from the compressor 15 to the turbine 40 for a flow of cooling air

The gas turbine engine 10 may use natural gas, various types of syngas, various types of liquid fuels, and/or other types of fuel and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

The gas turbine engine 10 may operate with an inlet air system 55. The inlet air system 55 may include a weatherhood 60 mounted on an inlet filter house 65 for the incoming flow of air 20 to pass therethrough. A silencer section 70 and one or more screens 75 also may be used herein and may be positioned within an inlet air plenum 80. The flow of air 20 thus may pass through the weatherhood 60, the inlet air plenum 80, and into the compressor 15 for compression and combustion as described above.

The inlet air system 55 also may include an inlet air water cooling system 85. The inlet air water cooling system 85 may be an evaporative cooling system, a chiller system, a fogger system, or any type of conventional water cooling system for cooling the incoming flow of air 20 as well as combinations thereof. The inlet air water cooling system 85 may be positioned anywhere along the inlet air system 55 and upstream of the compressor 15. The inlet air water cooling system 85 may be in communication with a water skid 90 or other type of conventional water source. One or more drift eliminators 95 may be positioned downstream of the water cooling system 85. The drift eliminators 95 may be of conventional design. Certain types of systems, such as foggers, high foggers, wet compression, and the like, may not use drift eliminators. The inlet air system 55 and the inlet air water cooling system 85 described herein are for the purpose of example only. Inlet air systems and inlet air water cooling systems with other components and other configurations also may be used herein.

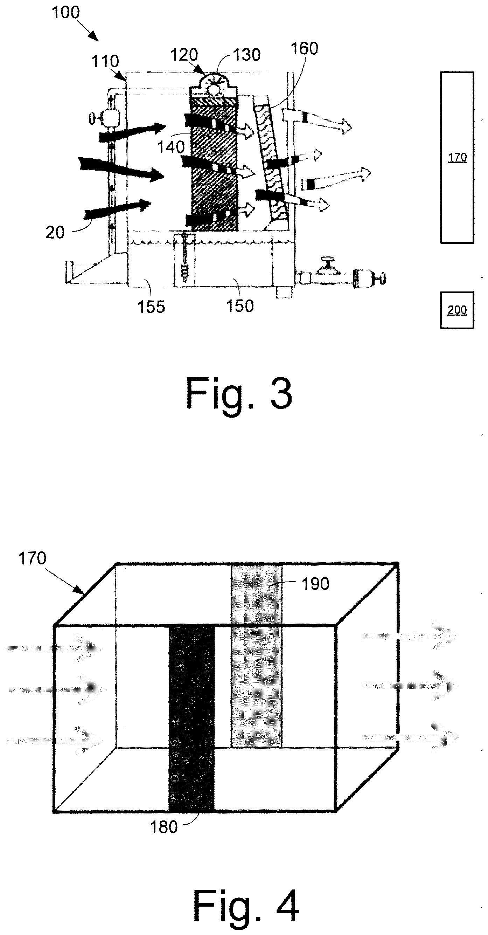

Figs. 3-5 show an example of an inlet air system 100 as may be described herein. The inlet air system 100 may be used with the gas turbine engine 10 and the like. The inlet air system 100 may include an inlet air water cooling system 110. In this example, the inlet air water cooling system 110 may be an evaporative cooling system 120. Generally described, the evaporative cooling system 120 may include a water header 130, an evaporative media pad 140, and a sump 150. A flow of water 155 may flow from the water header 130, through the evaporative media pad 140 for heat exchange with the incoming airflow 20, exits via the sump 150, and may be pumped again to the water header 130. The water in the evaporative media pad 140 cools the ambient airflow 20 through latent cooling or sensible cooling. The evaporative media pad 140 allows heat and/or mass transfer between the ambient air and the cooling water flow 155. Specifically, as the water passes through the soaked evaporator media pad, evaporation occurs so as to increase the density of the air which in turn increases the mass flow output of the overall gas turbine engine 10. A drift eliminator 160 may be positioned downstream of the evaporative media pad 140. The drift eliminator 160 may be of conventional design. Other components and other configuration may be used herein.

The inlet air system 100 also may include a moisture detection system 170. The moisture detection system 170 may be positioned downstream of the inlet air water cooling system 110 within the air plenum 80. The moisture detection system 170 may include one or more light sources or emitters 180. Any type of conventional light source 180 may be used herein with any wavelength in any part of the overall light spectrum. The moisture detection system 170 also may include one or more refraction detection sensors or receivers 190. The refraction detection sensors or receivers 190 may detect a light spectrum created by water droplets in the airflow 20 based upon light spectrometry. The refraction detection sensors or receivers 190 may be of conventional design. A controller 200 may be configured to receive a signal from the refraction detection sensor or receiver 190 corresponding to the intensity of the emitted light. The controller 200 may be of conventional design.

The light sources or emitters 180 may be spaced apart from the refraction detection sensors or receivers 190 for the flow of air 20 to pass therethrough in a substantially perpendicular configuration. Specifically, the light sources or emitters 180 may emit a beam of light at a predetermined intensity and/or wavelength into the flow of air 20. The refraction detection sensor or receiver 190 receives at least a portion of the emitted beam of light. If there is water carryover in the flow of air, the beam of light will pass through the droplets therein and a light spectrum will be generated as in a rainbow. The nature of the spectrum may be captured by the refraction detection sensor or receiver 190 and transmitted to the controller 200.

Droplet size and the amount of water carryover, i.e., the number of droplets, may be detected by the spectrum intensity and width respectively. Various spectrum intensities over time may be used as an allowable limit for operation of the inlet air water cooling system 110. On a scale of one to ten if the intensity is more than, for example, a five, for five seconds or more, the moisture detection system 170 may shut down the inlet air water cooling system 110 such that the inlet air water cooling system 110 may be calibrated accordingly. Likewise, the moisture detection system 170 may shut down the inlet air water cooling system 110 if the size of the droplets and/or the number of droplets exceed predetermined values. Other times, other intensities, and other parameters may be used herein. Other components and other configurations may be used herein.

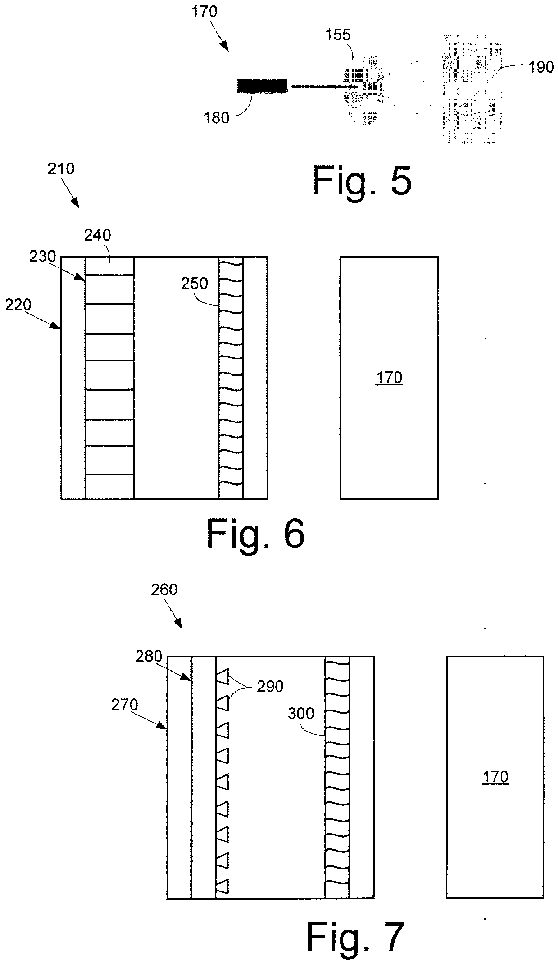

Fig. 6 shows a further embodiment of an inlet air system 210 as may be described herein. The inlet air system 210 may include an inlet air water cooling system 220. In this example, the inlet air water cooling system 220 may be a chiller system 230. The chiller system 230 may include a number of chiller coils 240. The chiller coils 240 may use a vapor absorption thermodynamic cycle to cool the incoming airflow 20. Specifically, the chiller coils 240 indirectly cool the incoming airflow 20 by creating condensate. The chiller system 230 may be of conventional design. A drift eliminator 250 may be positioned downstream of the chiller system 230 to eliminate condensate from the chiller coils 240 when cooling below the dew point temperature. The inlet air system 210 also may include the moisture detection system 170 positioned downstream of the inlet air water cooling system 220. The moisture detection system 170 may operate as described above. Other components and other configurations may be used herein.

Fig. 7 shows a further embodiment of an inlet air system 260 as may be described herein. The inlet air system 260 may include an inlet air water cooling system 270. In this example, the inlet air water cooling system 270 may be a fogger system 280. The fogger system 280 may include a nozzle array 290. The nozzle array 290 may atomize a flow of water into fine droplets to cool the incoming airflow 20. The fogger system 280 may be of conventional design. Although generally not used, a drift eliminator 300 may be positioned downstream of the fogger system 280. The inlet air system 260 also may include the moisture detection system 170 positioned downstream of the inlet air water cooling system 270. The moisture detection system 170 may operate as described above. Similar configurations may be used with high fogger systems, wet compression, and the like. Other components and other configurations may be used herein.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A gas turbine inlet air system for providing a flow of air to a compressor, comprising:
   an inlet air water cooling system positioned upstream of the compressor;
   the inlet air water cooling system cooling the flow of air with a flow of water; and
   a moisture detection system positioned downstream of the inlet air water cooling system to detect if droplets of the flow of water pass beyond the inlet air water cooling system in the flow of air towards the compressor.
2. The gas turbine inlet air system of clause 1, wherein the inlet air water cooling system comprises a drift eliminator.
3. The gas turbine inlet air system of any preceding clause, wherein the inlet air water cooling system comprises an evaporative cooling system.
4. The gas turbine inlet air system of any preceding clause, wherein the evaporative cooling system comprises an evaporative media pad.
5. The gas turbine inlet air system of any preceding clause, wherein the inlet air water cooling system comprises a chiller system.
6. The gas turbine inlet air system of any preceding clause, wherein the chiller system comprises a plurality of chiller coils and wherein the flow of water comprises a flow of condensate.
7. The gas turbine inlet air system of any preceding clause, wherein the inlet air water cooling system comprises a fogger system.
8. The gas turbine inlet air system of any preceding clause, wherein the fogger system comprises a nozzle array.
9. The gas turbine inlet air system of any preceding clause, wherein the moisture detection system comprises one or more light sources.
10. The gas turbine inlet air system of any preceding clause, wherein the one or more light sources emit light at a predetermined wavelength.
11. The gas turbine inlet air system of any preceding clause, wherein the moisture detection system comprises one or more refraction detection sensors.
12. The gas turbine inlet air system of any preceding clause, wherein the one or more refraction detection sensors detect a spectrum created by droplets in the flow of air.
13. The gas turbine inlet air system of any preceding clause, further comprising a controller in communication with the one or more refraction detection sensors and the inlet air water cooling system.
14. The gas turbine inlet air system of any preceding clause, wherein the one or more light sources and the one or more refraction detection sensors comprise a substantially perpendicular configuration with respect to the flow of air.
15. A method of operating a gas turbine inlet air system, comprising:
   cooling an inlet flow of air in an inlet air water cooling system with a flow of water;
   positioning a water detection system downstream of the inlet air water cooling system;
   optically monitoring the flow of air by the water detection system to determine if water droplets therein create a spectrum; and
   stopping the inlet air water cooling system if more than a predetermined volume of water droplets is detected.
16. A gas turbine engine operating on a flow of air, comprising:
   a compressor;
   an inlet air water cooling system positioned upstream of the compressor;
   the inlet air water cooling system cooling the flow of air with a flow of water;
   a drift eliminator positioned downstream of the inlet air water cooling system; and
   a moisture detection system positioned downstream of the drift eliminator to detect if droplets of the flow of water pass beyond the drift eliminator in the flow of air towards the compressor.
17. The gas turbine engine of any preceding clause, wherein the inlet air water cooling system comprises an evaporative cooling system.
18. The gas turbine engine of any preceding clause, wherein the inlet air water cooling system comprises a chiller system.
19. The gas turbine engine of any preceding clause, wherein the inlet water cooling system comprises a fogger system.
20. The gas turbine engine of any preceding clause, wherein the moisture detection system comprises one or more light source and one or more refraction detection sensors.

## Claims

1. A gas turbine inlet air system (100) for providing a flow of air (20) to a compressor (15), comprising:
an inlet air water cooling system (110) positioned upstream of the compressor (15);
the inlet air water cooling system (110) cooling the flow of air (20) with a flow of water (155); and
a moisture detection system (170) positioned downstream of the inlet air water cooling system (110) to detect if droplets of the flow of water (155) pass beyond the inlet air water cooling system (110) in the flow of air (20) towards the compressor (15).

2. The gas turbine inlet air system (100) of claim 1, wherein the inlet air water cooling system (110) comprises a drift eliminator (160).

3. The gas turbine inlet air system (100) of claim 1, wherein the inlet air water cooling system (110) comprises an evaporative cooling system (120).

4. The gas turbine inlet air system (100) of claim 3, wherein the evaporative cooling system (110) comprises an evaporative media pad (140).

5. The gas turbine inlet air system (100) of claim 1, wherein the inlet air water cooling system (110) comprises a chiller system (230).

6. The gas turbine inlet air system (100) of claim 5, wherein the chiller system (230) comprises a plurality of chiller coils (240) and the flow of water (155) comprises a flow of condensate.

7. The gas turbine inlet air system (100) of claim 1, wherein the inlet air water cooling system (110) comprises a fogger system (280).

8. The gas turbine inlet air system (100) of claim 7, wherein the fogger system (280) comprises a nozzle array (290).

9. The gas turbine inlet air system (100) of any preceding claim, wherein the moisture detection system (170) comprises one or more light sources (180).

10. The gas turbine inlet air system (100) of claim 9, wherein the one or more light sources (180) emit light at a predetermined wavelength.

11. The gas turbine inlet air system (100) of claim 9 or 10, wherein the moisture detection system (170) comprises one or more refraction detection sensors (190).

12. The gas turbine inlet air system (100) of claim 11, wherein the one or more refraction detection sensors (190) detect a spectrum created by droplets in the flow of air (20).

13. The gas turbine inlet air system (100) of claim 11 or 12, further comprising a controller (200) in communication with the one or more refraction detection sensors (180) and the inlet air water cooling system (170).

14. The gas turbine inlet air system (100) of claim 11, 12 or 13, wherein the one or more light sources (180) and the one or more refraction detection sensors (190) comprise a substantially perpendicular configuration with respect to the flow of air.

15. A method of operating a gas turbine inlet air system (100), comprising:
cooling an inlet flow of air (20) in an inlet air water cooling system (110) with a flow of water (155);
positioning a water detection system (170) downstream of the inlet air water cooling system (110);
optically monitoring the flow of air (20) by the water detection system (170) to determine if water droplets therein create a spectrum; and
stopping the inlet air water cooling system (110) if more than a predetermined volume of water droplets is detected.
